# EUROPÄISCHE PATENTSCHRIFT

(11) **EP 0 541 906 B1**
(45) Veröffentlichungstag und Bekanntmachung des Hinweises auf die Patenterteilung: **24.05.1995**
(21) Anmeldenummer: 92112762.7
(22) Anmeldetag: 25.07.1992
(51) Int. Cl.: F16D 59/02

(54) **Reibungsbremse**
Friction brake
Frein à friction

(30) Priorität: 13.11.1991 DE 4137316
(43) Veröffentlichungstag der Anmeldung: 19.05.1993
(73) Patentinhaber: Jungheinrich Aktiengesellschaft, 22047 Hamburg (DE)
(72) Erfinder: John, Uwe, Dipl.-Ing., W-2061 Nahe (DE)
(74) Vertreter: Patentanwälte Hauck, Graalfs, Wehnert, Döring, Siemons

(56) Entgegenhaltungen:
- EP-A- 0 009 180
- AT-B- 383 197
- DE-A- 2 814 200

## Beschreibung

Die Erfindung bezieht sich auf eine Reibungsbremse für Flurförderfahrzeuge, nach dem Oberbegriff des Patentanspruchs 1.

Beim grundsätzlichen Aufbau einer mechanisch betätigbaren Reibungsbremse wird der Bremsrotor normalerweise von einer Trommel oder einer Bremsscheibe gebildet und der Belagträger ist backenartig oder scheibenartig geformt und wird mit Hilfe eines mechanischen Gestänges gegen die Kraft mindestens einer Feder gelüftet. Derartige Reibungsbremsen werden auch bei Flurförderfahrzeugen als Fahrzeugbremse oder generell als Bremse für eine rotierende Welle eingesetzt. Das Gestänge wird von der Bedienungsperson unmittelbar, d.h. nicht über einen Hydraulikzylinder oder dergleichen betätigt.

Derartige Bremsen sind beispielsweise aus der DE 38 33 571 oder der DE 40 08 277 bekanntgeworden. Bei den bekannten Trommelbremsen werden die Bremsbacken zum Lüften mit Hilfe eines drehbaren Nockens entgegen einer Bremsfeder gespreizt. Bei den bekannten Reibungsbremsen wird außerdem die Betätigungskraft zum Lüften abhängig gemacht von dem Druck im Hubzylinder eines Förderfahrzeugs. Dies kann zum Beispiel dadurch geschehen, daß gemäß der DE 38 33 571 das Federwiderlager der Bremsfeder nach Maßgabe des Druckes verstellt wird. Hierdurch wird möglicherweise zu viel an Federweg verbraucht. Um dies zu verhindern, ist gemäß der DE 40 08 277 vorgeschlagen worden, bei zunehmender Last eine Kraft aufzubringen, welche der Kraftwirkung der Feder gleichgerichtet ist, wobei mit zunehmender Kraft der Bereich der Federwirkung erhöht wird.

Aus der GB 433 504 ist auch ein Betätigungsgestänge für eine Trommelbremse bekanntgeworden, bei dem zwischen den Bremsbacken eine Teleskopstange angeordnet ist und zwischen den Teleskopteilen eine Feder wirkt. Die Teleskopverbindung ist jedoch derart, daß die Druckkraft zum Spreizen der Bremsbacken formschlüssig aufgebracht wird, während die Teleskopverbindung nachgeben kann, wenn die Bremsbacken aufgrund des Bremsbelagverschleißes sich einander nähern.

Aus der AT-B-383 197 ist eine Reibungsbremse bekanntgeworden, bei der eine mit dem Belag des Bremsrotors zusammenwirkende Druckplatte über einen Bolzen betätigt wird, auf dem ein Klemmteil sitzt. Zwischen einem Anschlag auf dem Bolzen und dem Klemmteil ist eine Schraubenfeder auf dem Bolzen angeordnet, die das Klemmteil in Richtung einer Nockenrolle drückt, die von einem Magneten betätigt wird. Die Nockenrolle wirkt mit einer rampenartigen Fläche am Klemmteil zusammen und übt einen Druck auf das Klemmteil aus, wobei es auf dem Bolzen eine Kippbewegung ausführt und einen Kraftschluß mit dem Bolzen herstellt zur Übertragung der Betätigungskraft auf die Druckplatte und damit zum Lüften der Bremse.

Mechanisch belüftbaren Reibungsbremsen der beschriebenen Art ist eigen, daß die Lüftung formschlüssig erfolgt, d.h. der Weg, den der Angriffspunkt des Gestänges am Belagträger zurücklegt ist gleichzusetzen mit der Positionsveränderung des Bremsbelags relativ zum Bremsrotor. Zwischen der kompletten Anlage der Bremsbeläge am Bremsrotor und damit der maximalen Bremskraft und dem gelüfteten Zustand bestehen keine Zwischenstufen.

Daher liegt der Erfindung die Aufgabe zugrunde, eine mechanisch lüftbare Reibungsbremse für Flurförderfahrzeuge zu schaffen, die eine Dosiermöglichkeit beim Lüften und erneutem Anlegen des Bremsbelagträgers bereitstellt.

Diese Aufgabe wird erfindungsgemäß gelöst durch die Merkmale des Patentanspruchs 1.

Bei der erfindungsgemäßen Bremse wird die Druckkraft vom Gestänge auf den Belagträger über eine zwischengeschaltete Druckfeder übertragen, die so ausgelegt ist, daß sie beim Lüften der Bremse die Andrückkraft der Bremsfeder vollständig aufnehmen kann.

Bei der erfindungsgemäßen Bremse wirkt mithin die Druckfeder der Bremsfeder entgegen, so daß beim Aufbringen einer Bremskraft über das Gestänge die Bremsfeder zunächst teilweise entlastet wird, jedoch nach wie vor noch eine Bremskraft erzeugt, bis schließlich der Bremsträger mit seinem Belag von dem Bremsrotor abhebt. Mit Hilfe der Erfindung ist es daher möglich, durch eine geeignete Betätigung des Gestänges von der Bedienungsperson die Bremskraft beim Lüften und Wiederanlegen der Bremse zu variieren.

Besonders vorteilhaft ist die Erfindung bei einer Scheibenbremse, bei der die Bremsscheibe mit einem scheibenartigen Belagträger zusammenwirkt und ein schwenkbar gelagerter Hebel an der Außenseite des Belagträgers angreift und über einen Schraubenbolzen mit dem Belagträger verbunden ist. Bei einer derartigen Ausführungsform ist nach einer Ausgestaltung der Erfindung die Druckfeder zwischen einem der Bremsscheibe zugekehrten Widerlager des Schraubenbolzens und dem Belagträger angeordnet. Das Widerlager ist vorzugsweise topfförmig gestaltet, um die Feder sicher aufzunehmen. Diese ist nach einer weiteren Ausgestaltung der Erfindung vorzugsweise eine Tellerfeder oder ein Tellerfederpaket.

Die Druckfeder kann so ausgelegt werden, daß es zu einem Anschlag zwischen Widerlager und Bremsbelagträger kommt, bevor die Bremse lüftet. Der maximale Weg der Druckfeder kann jedoch dann für die Dosierung ausgenutzt werden, wenn die Druckfeder so ausgelegt ist, daß sie beim Lüften der Bremse die Andrückkraft der Bremsfeder vollständig aufnimmt.

Die Erfindung wird nachfolgend anhand eines Ausführungsbeispiels näher erläutert.

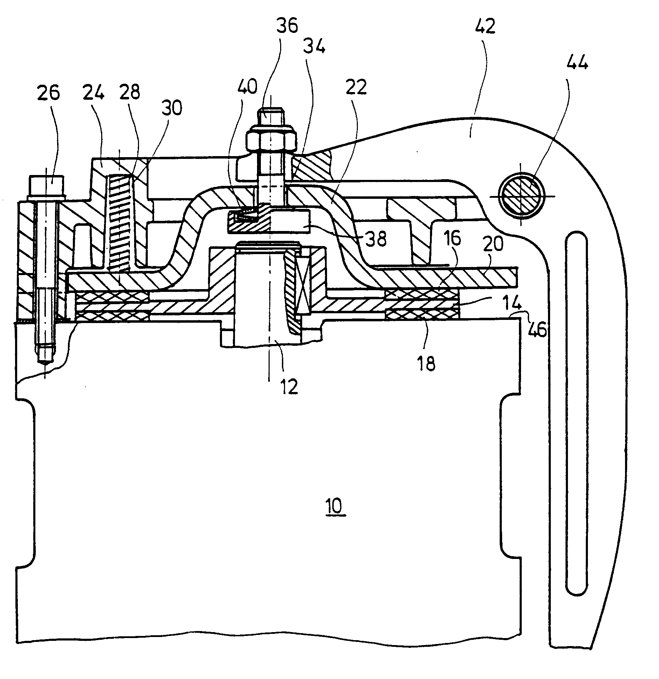

Die einzige Figur zeigt teilweise im Schnitt eine Scheibenbremse nach der Erfindung.

In einem Gehäuse 10 ist eine Welle 12 drehbar gelagert, die am Ende eine Bremsscheibe 14 drehfest hält. Mit der Bremsscheibe 14 sind auf beiden Seiten Bremsbeläge 16, 18 verbunden. Auf der den Bremsbelägen 16 zugekehrten Seite ist ein scheibenartiger Träger 20 angeordnet, der mittig bei 22 topfartig gewölbt ist. Ein Haltering 24 umgibt den topfartigen Abschnitt 22 und ist mit Hilfe von Schrauben, von denen eine bei 26 dargestellt ist, mit dem Gehäuse 10 fest verbunden. Der Ring 24 hält eine Reihe von Bremsfedern, von denen eine bei 28 dargestellt ist. Sie sind in Sackbohrungen 30 aufgenommen und wirken gegen die Außenseite des scheibenartigen Trägers 20.

Durch eine mittige Bohrung 34 des topfartigen Abschnitts 22 erstreckt sich ein Schraubenbolzen 36 hindurch, dessen relativ breiter Kopf 38 topfartig geformt ist. Er nimmt eine Doppeltellerfeder 40 auf, die gegen die Innenseite des topfartigen Abschnitts 22 anliegt. Der Bolzen 36 erstreckt sich durch eine entsprechende Öffnung eines Winkelhebels 42, der bei 44 schwenkbar gelagert ist.

Bei unbelastetem Hebel drücken die Bremsfedern 28 den drehfest angeordneten Träger gegen die Bremsscheibe 14. Diese ist axial verstellbar gelagert, so daß sie gegen die zugeordnete Fläche 46 des Gehäuses 10 gedrückt wird. Zum Lüften der Bremse wird der Hebel 42, ggf. über ein geeignetes nicht gezeigtes Gestänge, im Uhrzeigersinn geschwenkt. Dadurch wird jedoch der Träger 20 nicht formschlüssig von der Bremsscheibe 14 fortbewegt, sondern die auf den Hebel 42 ausgeübte Kraft wird zunächst von der Federanordnung 40 aufgenommen, so daß zunächst die Bremskraft der Bremsfedern 28 reduziert wird. Bei einer zunehmenden auf den Hebel 42 ausgeübten Kraft wird schließlich die Kraft der Bremsfedern 28 kompensiert, so daß der Träger 20 nunmehr gelüftet wird.

Wie erkennbar, läßt sich mit der beschriebenen Anordnung die Bremskraft beim Lüften und beim Wiederanlegen der Bremse in feiner Form dosieren bzw. variieren.

## Patentansprüche

1. Reibungsbremse für Flurförderzeuge mit einem Bremsrotor (14), einem drehfest, jedoch in Richtung auf den Bremsrotor (14) beweglich gelagerten Träger (20), der mittels mindestens einer Bremsfeder (28) ständig in Eingriff mit dem Bremsrotor (14) gedrückt wird, und einem am Träger angreifenden Gestänge (42) zum Lüften der Bremse, dadurch gekennzeichnet, daß die Kraft vom Gestänge (42) auf den Träger (20) über eine zwischengeschaltete Druckfeder (40) übertragen wird, wobei die Druckfeder (40) so ausgelegt ist, daß sie beim Lüften der Bremse die Andrückkraft der Bremsfeder (28) vollständig aufnehmen kann.

2. Reibungsbremse nach Anspruch 1, bei der eine Bremsscheibe und ein scheibenartiger Belagträger zusammenwirken und ein schwenkbar gelagerter Hebel an der Außenseite des Belagträgers angreift und über einen Schraubenbolzen mit dem Belagträger verbunden ist, dadurch gekennzeichnet, daß die Druckfeder (40) zwischen einem der Bremsscheibe (14) zugeordneten Widerlager (38) des Schraubenbolzens (36) und dem Belagträger (20) angeordnet ist.

3. Reibungsbremse nach Anspruch 2, dadurch gekennzeichnet, daß eine Tellerfeder oder ein Tellerfederpaket (40) vorgesehen ist.

4. Reibungsbremse nach Anspruch 2 oder 3, dadurch gekennzeichnet, daß das Widerlager (38) topfförmig ist.

## Claims

1. A friction brake for industrial lift trucks, including a brake rotor (14), a support member (20) mounted so as to be non-rotatable, however displaceable towards the brake rotor (14), which support member is normally urged into engagement with the brake rotor (14) by means of at least one brake spring (28), and a support member engaging linkage (42) for disengaging the brake, characterized in that the force is transmitted from the linkage (42) to the support member (20) via an intermediate compression spring (40), the compression spring (40) being designed so that it takes up completely the application force of the brake spring (28) when the brake is disengaged.

2. A friction brake according to claim 1, wherein a brake disk and a disk-like support member cooperate and a pivotally mounted lever engages the outer surface of the support member and is connected to the support member via a bolt, characterized in that the compression spring (40) is disposed between an abutment (38) of the bolt (36) and the support member (20).

3. A friction brake according to claim 2, characterized in that it includes a Belleville-spring or an assembly of Belleville-springs (40).

4. A friction brake according to claim 2 or claim 3, characterized in that the abutment (38) is cup-shaped.

## Revendications

1. Frein à friction pour chariots de manutention, comportant un rotor de frein (14), un support (20) monté sans possibilité de pivoter, mais avec possibilité de se déplacer en direction du rotor de frein (14), ce support (20) étant poussé en permanence par au moins un ressort (28) pour venir en prise avec le rotor de frein (14), et une tige de commande (42) agissant sur le support pour desserrer le frein, caractérisé en ce que la force est transmise de la tige de commande (42) au support (20) par un ressort de pression intermédiaire (40), ce ressort de pression (40) étant choisi de manière à pouvoir absorber complètement la force de pression du ressort de frein (28) lors du desserrage du frein.

2. Frein à friction selon la revendication 1, dans lequel un disque de frein et un support de garniture en forme de disque coopèrent et un levier mis en place avec possibilité de pivoter s'applique sur l'extérieur du support de garniture et est relié par une tige filetée au support de garniture, caractérisé en ce que le ressort de pression (40) est placé entre une butée (38) de la tige filetée (36) placée du côté du disque de frein (14) et le support de garniture (20).

3. Frein à friction selon la revendication 2, caractérisé en ce qu'il est prévu une rondelle-ressort ou un paquet de rondelles-ressorts (40).

4. Frein à friction selon la revendication 2 ou 3, caractérisé en ce que la butée (38) a la forme d'une cuvette.
